# EUROPEAN PATENT SPECIFICATION

(11) **EP 3 409 102 B1**
(45) Date of publication and mention of the grant of the patent: **25.12.2019**
(21) Application number: 17173362.9
(22) Date of filing: 30.05.2017
(51) Int. Cl.: A01G 31/00, A01G 27/00

(54) **LOCKING AND EMPTYING SYSTEM OF REFILL CARTRIDGE**
EIN VERRIEGELUNGS- UND ENTLEERUNGSSYSTEM VON NACHFÜLLPATRONEN
SYSTEME DE VERROUILLAGE ET DE VIDAGE DE CARTOUCHE

(43) Date of publication of application: 05.12.2018
(73) Proprietor: Natufia Labs OÜ, 10621 Tallinn (EE)
(72) Inventor: Lu, Gregory Francis Chakwan, 74013 Püünsi küla (EE); Kapp, Lauri, 10619 Tallinn (EE)
(74) Representative: Toome, Jürgen

(56) References cited:
- WO-A1-2012/133199
- WO-A1-2014/148840
- GB-A- 1 230 271
- US-A1- 2012 050 423

## Description

### Technical Field

Present invention relates to a locking and emptying system of a refill cartridge. Mainly the present invention relates to a locking and emptying system of a refill cartridge of nutrients or other chemicals used in automatic growing cabinets of plants. Those refill cartridges contain for example nutrients necessary for growing plants, compound for setting pH-level of water, etc. Also this type of a locking system for a refill cartridge can be used for pools and/or jacuzzis, where those refill cartridges are used for chemical(s) for regulating pH-level of water and/or for a chlorine compound or other compounds for water purification. The locking system according to the inventions can also be used in connection with aquariums. The use of the present invention is not limited to the automatic growing cabinets of plants and it is obvious to a person skilled in the art, that the system according to the invention can be used with other equipment, such as water purification equipment for pools and/or jacuzzis or for fish tanks (aquariums).

### Background Art

The automatic growing cabinets of plants comprise reservoirs for nutrients and other chemicals. Also other equipment such as equipment for pools and/or jacuzzis or for fish tanks can include this type of reservoirs. Refilling of those reservoirs usually includes opening a cap of those containers and adding the corresponding nutrient or other chemical from a bottle or some other container.

This poses a risk to the user - in course of pouring the liquid may be spilled and thus come in contact with clothes or skin, causing etching or skin irritation. In addition, just breathing in vapours of those products can be irritating and/or dangerous.

Whereas growing cabinets of this kind (or other places of use of those refill cartridges) are both in professional and non-professional use (for example at home, in office), it must be insured that third parties (for example children) do not come in contact with said nutrients or other chemicals.

From prior art different types of refill cartridges are known, which are used in many different fields. The ordinary consumer is most familiar for example with refill cartridges used in the inkjet printers. For example, such a refill cartridge, which may be inserted in a receiving socket, is known from US20120050423. But similar cartridges are being used also in other fields.

In traditional systems said refill cartridges are usually removable from their receiving sockets at any moment when a need for that occurs. Usually such refill cartridges are fixed into the receiving socket with a manually releasable snap-in joint or other resilient retainer, which enables to keep said refill cartridge in place and also to remove it.

Usually the locking and emptying system of the refill cartridge comprises at least one replaceable refill cartridge, at least one receiving socket for the refill cartridge and in every receiving socket a locking mechanism for the cartridge.

For example, such a refill cartridge is known from the US patent application US2012249691A1 (published on 04.10.2014).

### Summary of invention

Due to the field of use of the refill cartridges of the present invention and the chemicals contained in those cartridges, which are often corrosive, one of the objects of the present invention is to ensure that said refill cartridges can be retrieved from their receiving sockets only when said cartridges are completely empty and dry, i.e. there is no risk that the user would come into contact with chemicals contained in those refill cartridges.

As those refill cartridges are also used to replenish emptying containers (i.e. reservoirs for nutrients and other chemicals), another object is to ensure that an empty refill cartridge could be removed and replaced with a new one only when the emptying container has enough space for receiving the contents of the other (new) refill cartridge.

Therefore, the present invention relates to a locking and emptying system of a refill cartridge in a receiving socket of the refill cartridge. Said system comprises at least one receiving socket for locking and emptying said refill cartridge in the receiving socket, in every receiving socket a locking mechanism of the refill cartridge, discharge means of the refill cartridge and control means of the locking and empting system and for each refill cartridge an emptying container.

In the vicinity of the insertion end of the refill cartridge to be inserted into the receiving socket, the upper face of said refill cartridge comprises a locking depression.

The locking mechanism in the rear of said receiving socket comprises a lever mechanism with three levers mutually rigidly connected through their ends and forming generally a T-shape unit. Said levers form a single unit rotatable around the horizontal rotation axis of the lever mechanism, said rotation axis of the lever mechanism is crosswise to the insertion direction of said refill cartridge.

The locking lever comprises at the end of the lever a hook for engagement with the locking depression of the refill cartridge. The end of the operating lever is linked to an electromagnetic actuator in the receiving socket. Said electromagnetic actuator can be in different forms, such as an electromagnet or electric motor with transmission.

The pushing lever is positioned between the locking lever and the operating lever and is generally protruding in relation to the longitudinal lengths of the locking lever and operating lever. Thus in side view they form generally a T-shape unit.

The pushing lever comprises a protrusion in the vicinity of the end of the lever and said protrusion is crosswise to the insertion direction of said refill cartridge. It should be noted that said protrusion is transverse to the imaginary plane comprising said locking lever, operating lever and pushing lever.

In the situation, where the insertion of said refill cartridge into the receiving socket has just commenced, i.e. when the cartridge is only partially inserted into the receiving socket, the end face of said refill cartridge is pressed against the pushing lever of the lever mechanism and as a result said pushing lever together with the locking and operating lever is rotated around said rotation axis of the lever mechanism.

In the situation, where said refill cartridge has been completely inserted into the receiving socket, said end face of the refill cartridge is pressed against said pushing lever and the hook at the end of the locking lever is rotated around said rotation axis into engagement with the locking depression of the refill cartridge. In that position said refill cartridge is locked into the receiving socket and cannot be removed from said socket from outside.

The discharge means of the refill cartridge comprises piercing means of the discharge opening of the refill cartridge. Said piercing means comprise an activation part, a piercing tip and between said activation part and piercing tip a rotation axis of the piercing means, which is crosswise to the insertion direction of the refill cartridge.

In the position where said refill cartridge has been completely inserted into the receiving socket, said end face of the refill cartridge is pressed against said activation part and thus said piercing tip is rotated around said rotation axis into the discharge opening of the refill cartridge. In other words, the piercing tip is pressed through the membrane into the discharge opening and the contents of the refill cartridge are drained into an emptying container.

The volume of the emptying container is at least larger than the volume of a single refill cartridge. This ensures that another full refill cartridge can be inserted before the contents of the previous refill cartridge are completely used up.

To release said refill cartridge from the receiving socket, the electromagnetic actuator is activated by the control means of the locking and emptying system. As a result of the activation of the electromagnetic actuator, which is linked with the end of the operating lever, the operating lever of the lever mechanism together with locking lever and operating lever is rotated around the rotation axis of the lever mechanism and the hook at the end of the locking lever is released from engagement with the locking depression of the refill cartridge. At the same time the pushing lever is pushed against the end face of the refill cartridge and said refill cartridge is displaced in the direction opposite to the insertion direction of said refill cartridge into the receiving socket.

In said outwardly displaced position said refill cartridge can be removed from the receiving socket from the outside.

In one preferred embodiment of the invention with the help of the protrusion in the vicinity of the end of the pushing lever, the activation part of the piercing means of the discharge opening of the refill cartridge is rotated around the rotation axis and the piercing tip is rotated out of said discharge opening of said refill cartridge. This ensures that the piercing end does not hinder the removal of the cartridge from the receiving socket.

The control means of the locking system are connected to the control system of an automatic growing cabinet - this controls according to the pre-determined program and signals from the sensors unlocking of the locking system of the refill cartridges.

It is obvious that when the locking system according to the present invention is used in other types of systems (e.g. pools, jacuzzis, aquariums, etc.), the control means of the locking system are connected to the control system of that particular system (i.e. pools, jacuzzis, aquariums, etc.).

Emptying of containers is provided with the sensors determining the levels of liquids contained in them. This is used to determine whether a particular emptying container has enough space to receive the contents of the new refill cartridge.

In addition, said control means of the locking system may be set to lock the refill cartridge after being inserted into the receiving socket for a pre-determined emptying period of the refill cartridge, whereby during that period removing of the refill cartridge from the receiving socket is blocked by the locking system. This ensures that the contents of the refill cartridge have completely drained into the emptying container. It also ensures that any residues of the contents at the discharge opening of the refill cartridge have dried.

Preferably the volume of the emptying container of each refill cartridge corresponds at least to the twofold volume of the contents of the corresponding refill cartridge.

The emptying means of the refill cartridge comprises a piercing means of the discharge opening of the cartridge driveable by the end face of the cartridge.

The emptying means of the refill cartridge comprises a piercing means of the discharge opening of the cartridge driveable by the end face of the cartridge, where said piercing means comprise an activation part of the piercing means drivable by the end face of the cartridge, where said activation part rotates the piercing means around the rotation axis crosswise to the insertion direction of the cartridge, where on the other side of the axis said piercing means comprise a piercing tip, which in the situation when the refill cartridge is pressed completely into the receiving socket, is pressed into the discharge opening of the cartridge.

Optionally the activation of the emptying means can be implemented by an electromagnetic actuator, which is activated when the refill cartridge is locked into the receiving socket.

The cross-section of the refill cartridge crosswise to the insertion direction corresponds to the shape of the insertion opening of the receiving socket.

This is necessary to ensure that into each receiving socket only a refill cartridge with the specific shape can be inserted, as the refill cartridges with different shapes have different contents. This way the replenishment of the emptying container with wrong contents is avoided.

### Brief description of drawings

The present invention is now described in detail with references to the accompanying drawings, in which:
Figure 1 represents an axonometric view of the refill cartridge being inserted into the receiving socket, when said refill cartridge has not yet been locked;
Figures 2 to 5 represent in longitudinal sections of the refill cartridge inserted into the receiving socket in four different positions, wherein:

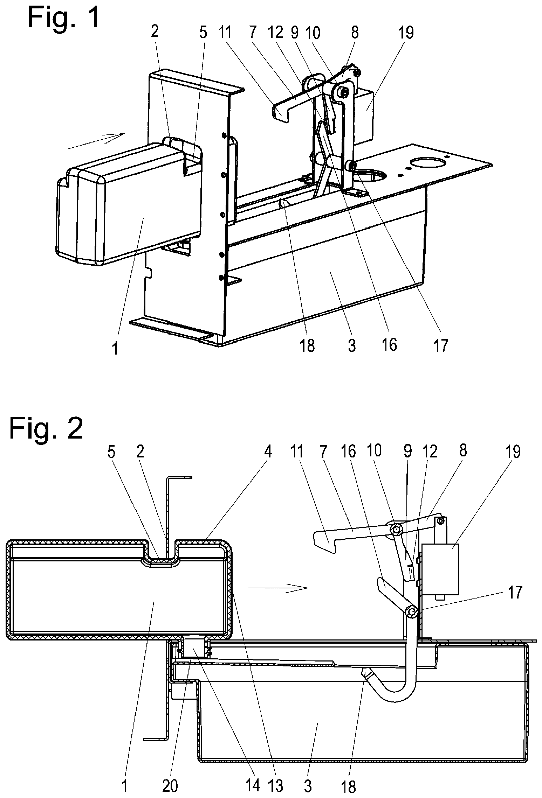

   on Figure 2 the refill cartridge has just been inserted into the receiving socket and it does not touch the lever mechanism of the locking system;

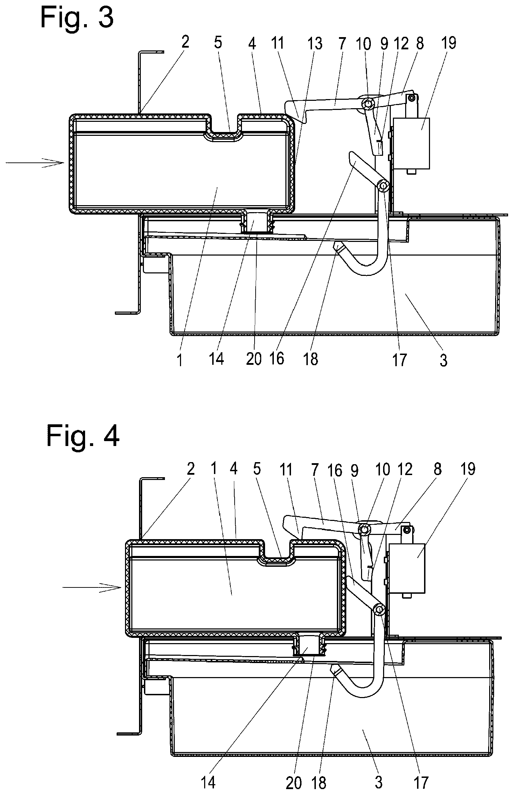

   on Figure 3 the refill cartridge is already pushed against the locking lever of the lever mechanism and the lever mechanism has started to rotate around its rotational axis together with the operating lever and pushing lever, and
   on Figure 4 the refill cartridge is pushed all the way into the receiving socket and it has been locked into place with the hook of the locking lever and the activation part has pushed the piercing tip into the discharge opening of the refill cartridge;

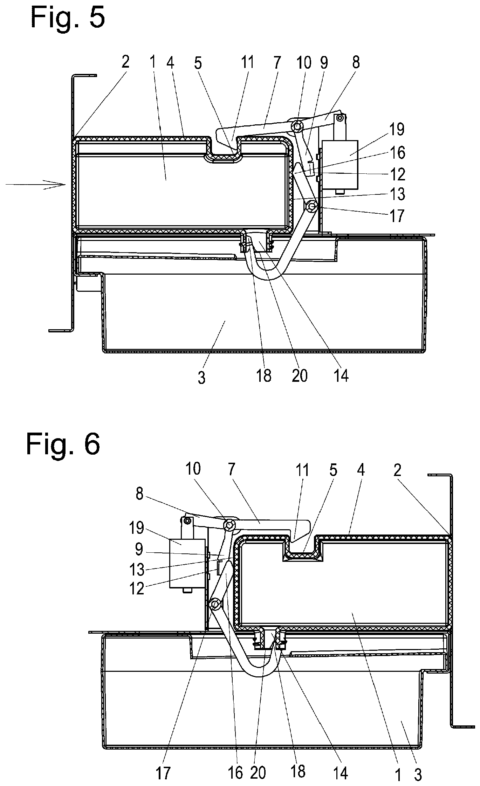

Figure 6 represents in a longitudinal section viewed from the other side of the cartridge, the refill cartridge inserted into the receiving socket;

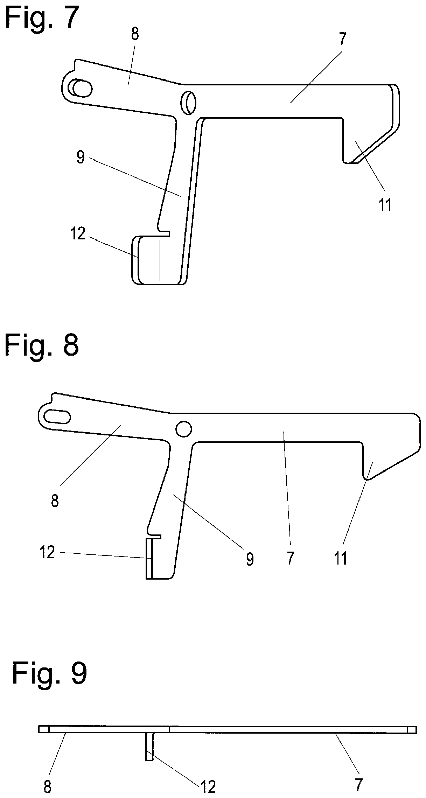

Figure 7 represents an axonometric view of the lever mechanism;
Figure 8 represents a side view of the lever mechanism;
Figure 9 represents a top view of the lever mechanism;

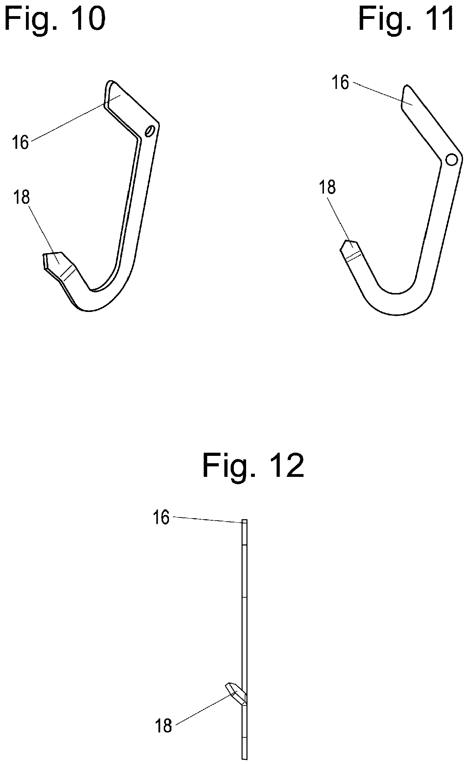

Figure 10 represents an axonometric view of the piercing means;
Figure 11 represents a side view of the piercing means;
Figure 12 represents a top view of the piercing means.

### Description of embodiments

The attached drawings represent only one possible embodiment out of many other possible embodiments of the locking and emptying system of a refill cartridge. In the attached drawings there is depicted only one refill cartridge 1 in the receiving socket 2 and on the emptying container 3. Understandably the actual device may comprise side by side multiple refill cartridges each in its corresponding receiving socket. For the clarity of the drawings, the sensors, limit switches, wiring and other details which are not essential to understand the present invention are omitted from the drawings.

On the upper face 4 of the refill cartridge 1 there is a locking depression 5, in the proximity of the end of the cartridge to be inserted into the receiving socket 2. This depression is intended to be engaged with the hook 11 of the locking lever 7 of the lever mechanism of the locking system, see Figures 1 to 6.

The lever mechanism comprises three mutually rigidly connected levers 7, 8 and 9. In the embodiment depicted on drawings said lever mechanism is made of the sheet metal or moulded from plastic. In the part where all the ends of the three levers 7, 8, 9 meet and are connected together, said lever mechanism comprises an opening for the rotation axis 10 of the lever mechanism.

When the refill cartridge 1 is inserted into the receiving socket 2, the end face 13 of the refill cartridge 1 is pushed against the end of the locking lever 7 of the lever mechanism, as a result the lever mechanism is rotated as a single unit around the rotation axis 10 of the lever mechanism. Because levers 7, 8 and 9 of the lever mechanism 6 are mutually rigidly connected (generally T-shaped unit as can be seen from the drawings), the operating lever 8 and the pushing lever 9 of the lever mechanism 6 are also rotated around the rotation axis 10.

When the refill cartridge 1 is inserted far enough into the receiving socket 2, the activation part 16 of the piercing means of the discharge opening 14 is also pushed against the end face 13 and as a result, said activation part 16 rotates the piercing means around the rotation axis 17 together with a piercing tip 18, which is located at the other side of the rotation axis 17 in relation to the activation part. The piercing tip 18 is pushed into the discharge opening 14 of the refill cartridge 1, when the refill cartridge 1 is pushed all the way into the receiving socket 2. Especially from Figures 5 and 6 it can be seen, that in the locked position of the refill cartridge 1 the piercing tip 18 has a pierced membrane 20, which normally closes the discharge opening 14 of the refill cartridge 1.

In other words, the locking lever 7 is pushed into the locking depression 5 by the end face 13 of the cartridge 1, when the cartridge 1 is pushed into the receiving socket 2 as is shown by an arrow on the drawings. The end face 13 pushes against the activation part 16 of the piercing means and the activation part 16 in turn presses against the protrusion 12 of the pushing lever 9. This pushes the hook 11 of the locking lever 7 into the locking depression 5. This action (pushing the cartridge 1 into the socket) pushes also the piercing tip 18 through the cartridge membrane 20.

In this position the lever mechanism of the locking system locks the refill cartridge 1 with the hook 11 on the locking lever 7 into the holding position, i.e. into the locking position of the refill cartridge 1.

The piercing tip 18 of the piercing means moves into the discharge opening 14 of the refill cartridge 1 from below through a groove at the top of the emptying container 3.

As can be seen from Figures 5 and 6, the refill cartridge 1 cannot be removed from the receiving socket 2 until the locking lever 7 with the hook 11 is engaged with the locking depression 5 on the upper surface 4 of the cartridge 1.

Because in the normal state of the electromagnetic the actuator 19 is biased into the locking position, i.e. when no current runs through it (i.e. it is not activated), the locking lever 7 with the hook 11 remains in the locking position, and it is ensured that the refill cartridge 1 can be removed from the receiving socket 2 only when the activation signal (current) is led from the control means of the locking system into the electromagnetic actuator 19, as a result said electromagnetic actuator 19 then pulls the end of the operating lever 8 of the lever mechanism whereupon the whole lever mechanism with the levers 7, 8 and 9 rotates around the rotation axis 10 and the pushing lever 9 pushes against the end face 13 of the cartridge 1.

As a result, the other end of the cartridge 1 is pushed out of the receiving socket 2 and then the refill cartridge 1 can be removed by the user. Also the protrusion 12 at the end of the pushing lever 9 engages the activation part 16 of the piercing means and causes it to rotate around the rotation axis 17. This rotates the piercing tip 18 out of the discharge opening 14 of the cartridge 1 ensuring that the piercing tip 18 does not hinder the removal of the cartridge from the socket 2.

In other words, to unlock and eject the cartridge 1, the electromagnetic actuator 19 pulls down on the operating lever 8 which releases the hook 11 from the depression 5, as well as actuates the activation part 16 via the protrusion 12. This causes the activation part 16 to be pushed against the end face 13 of the cartridge 1 thus pushing the cartridge 1 slightly out of the receiving socket 2 and also releasing the piercing tip 18 from the discharge opening 14.

The control means of the locking system are connected or integrated with the control electronics of the automatic growing cabinet.

Each emptying container 3 is provided with a sensor (not shown) to determine the level of its contents. This information is necessary, because preferably the empty refill cartridge 1 is released from the receiving socket 2 only when the level of the liquid in the receiving container 3 is dropped in an amount, which enables the receiving container to receive the full contents of the next full refill cartridge 1.

For an additional safety measure the control means of the locking system are set to lock the refill cartridge after insertion into the receiving socket for the minimal emptying period of the refill cartridge and during that period the removal of the refill cartridge is blocked by the locking system. This is necessary to ensure that all the contents of the refill cartridge has emptied into the emptying container and any possible residues (drops) of the content at the discharge opening of the refill cartridge have dried.

### Reference signs list

1 - refill cartridge
2 - receiving socket
3 - emptying container
4 - upper face of the refill cartridge
5 - locking depression
6 - lever mechanism
7 - locking lever of the lever mechanism
8 - operating lever of the lever mechanism
9 - pushing lever of the lever mechanism
10 - rotation axis of the lever mechanism
11 - hook
12 - projection
13 - end face of the refill cartridge
14 - discharge opening of the refill cartridge
15 - piercing means of the discharge opening
16 - activation part
17 - rotation axis (pivot) of the piercing means
18 - piercing tip
19 - electromagnetic actuator
20 - membrane

## Claims

1. A locking and emptying system of a refill cartridge (1) in a receiving socket (2) of the refill cartridge (1), said system comprising at least one receiving socket (2) for locking and emptying said refill cartridge (1) in the receiving socket (2), in every receiving socket (2) a locking mechanism for the refill cartridge (1), discharge means for the refill cartridge (1) and control means of the locking and emptying system, wherein in the vicinity of the insertion end of the refill cartridge (1) inserted into the receiving socket (2) the upper face (4) of said refill cartridge (1) comprises a locking depression (5); **characterised in that** said system further comprising in every receiving socket (2) for each refill cartridge (1) an emptying container (3) and wherein the locking mechanism is in the rear of said receiving socket (2) comprising a lever mechanism with three levers (7, 8, 9) mutually rigidly connected through their ends and forming generally a T-shape unit, which is rotatable around the horizontal rotation axis (10) of the lever mechanism, said rotation axis (10) being crosswise to the insertion direction of said refill cartridge (1);
whereas the locking lever (7) comprises a hook (11) for the engagement with the locking depression (5) of the refill cartridge (1), the end of the operating lever (8) is linked to an electromagnetic actuator (19) in the receiving socket (2) and the pushing lever (9) is positioned between the locking lever (7) and the operating lever (8);
whereas in the position where said refill cartridge (1) is inserted into the receiving socket (2), the end face (13) of said refill cartridge (1) is pressed against the pushing lever (9) of the lever mechanism, as a result said pushing lever together with the locking lever (7) and the operating lever (8) is made to rotate around said rotation axis (10); and
whereas in the position where said refill cartridge (1) is inserted completely into the receiving socket (2), said end face (13) of the refill cartridge (1) is pressed against said pushing lever (9) and the hook (11) at the end of the locking lever (7) is rotated around said rotation axis (10) into engagement with the locking depression (5) of the refill cartridge (1);
the discharge means of the refill cartridge (1) comprising a piercing means of the discharge opening (14) of the refill cartridge (1), said piercing means comprising an activation part (16), a piercing tip (18) and between them a rotation axis (17) of the piercing means crosswise to the insertion direction of the refill cartridge (1) and in the position when said refill cartridge (1) is inserted completely into the receiving socket (2), said end face (13) of the refill cartridge (1) is pressed against said activation part (16) and said piercing tip (18) is rotated around said rotation axis (17) into the discharge opening (14) of said refill cartridge(1).

2. The system according to claim 1, ***characterized in that*** for release of said refill cartridge (1) from the receiving socket (2), the electromagnetic actuator (19) is activated by the control means of the locking and empting system and as a result of the activation of the electromagnetic actuator (19) the operating lever (8) of the lever mechanism together with locking lever (7) and the pushing lever (9) is rotated around the rotation axis (10) of the lever mechanism and the hook (11) at the end of the locking lever (7) is released from engagement with the locking depression (5) of the refill cartridge (1) and the pushing lever (9) is pushed against the end face (13) of the refill cartridge (1) and said refill cartridge (1) is displaced in the direction opposite to the insertion direction of said refill cartridge (1) into the receiving socket (2).

3. The system according to claim 1, ***characterized in that*** for release of said refill cartridge (1) from the receiving socket (2), the electromagnetic actuator (19) is activated by the control means of the locking and empting system and as a result of the activation of the electromagnetic actuator (19), the operating lever (8) of the lever mechanism together with the locking lever (7) and the pushing lever (9) is rotated around the rotation axis (10) of the lever mechanism and the hook (11) at the end of the locking lever (7) is released from engagement with the locking depression (5) of the refill cartridge (1) and the pushing lever (9) is pushed against the end face (13) of the refill cartridge (1) and said refill cartridge (1) is displaced in the direction opposite to the insertion direction of said refill cartridge (1) into the receiving socket (2), and with the protrusion (12) in the vicinity of the end of the pushing lever (9), said protrusion (12) being crosswise to the insertion direction of said refill cartridge (1), the activation part (16) of the piercing means of the discharge opening (14) of the refill cartridge (1) is rotated around said rotation axis (17) and the piercing tip (18) is rotated out of said discharge opening (14) of said refill cartridge (1).

## Patentansprüche

1. Ein Verriegelungs- und Entleerungssystem von Nachfüllpatronen (1) in einer Anschlussbuchse (2) von Nachfüllpatronen (1), das genannte System umfasst mindestens eine Anschlussbuchse (2) zum Verriegeln und Entleeren der genannten Nachfüllpatrone (1) in einer Anschlussbuchse (2), in jeder Anschlussbuchse (2) ist eine Verriegelungsmechanismus für die Nachfüllpatrone (1), ein Entleerungsmechanismus für die Nachfüllpatrone (1) und ein Kontrollmechanismus des Verriegelungs- und Entleerungssystems, wobei in der Nähe des Einsatzes der Nachfüllpatrone (1), die an die Anschlussbuchse (2) angeschlossen ist, die Oberseite (4) der genannten Nachfüllpatrone (1) eine Verriegelungsvertiefung (5) umfasst, **dadurch gekennzeichnet, dass** das genannte System weiter in jeder Anschlussbuchse (2) für jede Nachfüllpatrone (1) einen Entleerungsbehälter (3) umfasst und worin der Verriegelungsmechanismus an der Rückseite der sogenannten Anschlussbuchse (2) einen Hebelmechanismus mit drei Hebeln (7, 8, 9) umfasst, die gegenseitig fest durch ihre Enden verbunden sind und allgemein eine T-Form-Einheit formt, die um die horizontale Drehachse (10) des Hebelmechanismus drehbar ist, genannte Drehachse (10) ist über Kreuz mit der Einsteckrichtung der genannten Nachfüllpatrone (1);
wobei der Verriegelungshebel (7) einen Haken (11) für den Einsatz mit der Verriegelungsvertiefung (5) der Nachfüllpatrone (1) umfasst, das Ende des Bedienhebels (8) ist ein elektromagnetischer Stellantrieb (19) in der Anschlussbuchse (2) verbunden und der Druckhebel (9) ist zwischen dem Verschlusshebel (7) und dem Bedienhebel (8) positioniert;
wobei in der Position, in der die genannte Nachfüllpatrone (1) in der Anschlussbuchse (2) eingesteckt ist, die Endseite (13) der genannten Nachfüllpatrone (1) gegen den Druckhebel (9) des Hebelmechanismus gedrückt wird, als Ergebnis des Drückens des genannten Druckhebels gemeinsam mit dem Verriegelungshebel (7) und dem Bedienhebel (8) wird sie um die genannte Drehachse (10) gedreht; und
wobei in der Position, in der die genannte Nachfüllpatrone (1) vollkommen in die Anschlussbuchse (2) eingesteckt ist, die genannte Endseite (13) der Nachfüllpatrone (1) gegen den genannten Druckhebel (9) gedrückt wird und der Haken (11) am Ende des Verrieglungshebels (7) um die genannte Drehachse (10) in den Einsatz der Verriegelungsvertiefung (5) der Nachfüllpatrone (1) gedreht wird;
der Entleerungsmechanismus der Nachfüllpatrone (1) umfasst eine Stechvorrichtung der Auslassöffnung (14) der Nachfüllpatrone (1), genannte Stechvorrichtung umfasst einen Auslöseteil (16), eine Stechspitze (18) und zwischen ihnen eine Drehachse (17) der Stechvorrichtung über Kreuz zur Einsteckrichtung der Nachfüllpatrone (1) und in der Position, in der die genannte Nachfüllpatrone (1) vollkommen in die Anschlussbuchse (2) eingesteckt ist, die genannte Endseite (13) der Nachfüllpatrone (1) gegen das Auslöseteil (16) gedrückt wird und die genannte Stechspitze (18) um die genannte Drehachse (17) in die Auslassöffnung (14) der genannten Nachfüllpatrone (1) gedreht wird.

2. Das System nach Anspruch 1, **dadurch gekennzeichnet, dass** für die Freisetzung der genannten Nachfüllpatrone (1) aus der Anschlussbuchse (2), der elektromechanische Stellantrieb (19) durch den Kontrollmechanismus des Verriegelungs- und Entleerungssystems aktiviert wird und als Folge der Aktivierung des elektromagnetische Stellantriebs (19) wird der Bedienhebel (8) des Hebelmechanismus zusammen mit dem Verriegelungshebel (7) und dem Druckhebel (9) um die Drehachse (10) des Hebelmechanismus gedreht und der Haken (11) am Ende des Verriegelungshebels (7) wird von der Verbindung mit der Verriegelungsvertiefung (5) der Nachfüllpatrone (1) freigegeben und der Drückhebel (9) wird gegen die Endseite (13) der Nachfüllpatrone (1) gedrückt und die genannte Nachfüllpatrone (1) wird in der entgegengesetzten Richtung zur Einsteckrichtung der genannten Nachfüllpatrone (1) in die Anschlussbuchse (2) bewegt.

3. Das System nach Anspruch 1, **dadurch gekennzeichnet, dass** für die Freisetzung der genannten Nachfüllpatrone (1) aus der Anschlussbuchse (2), der elektromechanische Stellantrieb (19) durch den Kontrollmechanismus des Verriegelungs- und Entleerungssystems aktiviert wird und als Folge der Aktivierung des elektromagnetische Stellantriebs (19) wird der Bedienhebel (8) des Hebelmechanismus zusammen mit dem Verriegelungshebel (7) und dem Druckhebel (9) um die Drehachse (10) des Hebelmechanismus gedreht und der Haken (11) am Ende des Verriegelungshebels (7) wird aus der Verbindung mit der Verriegelungsvertiefung (5) der Nachfüllpatrone (1) freigegeben und der Druckhebel (9) wird gegen die Endseite (13) der Nachfüllpatrone (1) gedrückt und die genannte Nachfüllpatrone (1) in die entgegengesetzte Richtung der Einsteckrichtung der genannten Nachfüllpatrone (1) in die Anschlussbuchse (2) verschoben, und mit der Ausbuchtung (12) in der Nähe des Endes des Druckhebels (9), wird die genannte Ausbuchtung (12), welche über Kreuz mit der Einsteckrichtung der genannten Nachfüllpatrone (1) ist, wird der Aktivierungsteil (16) der Stechvorrichtung der Auslassöffnung (14) der Nachfüllpatrone (1) um die genannte Drehachse (17) gedreht und die Stechspitze (18) wird aus der Ausstecköffnung (14) der Nachfüllpatrone (1) gedreht.

## Revendications

1. Système de verrouillage et de vidage d'une cartouche de recharge (1) dans une logement de réception (2) de la cartouche de recharge (1), ledit système comprenant au moins une logement de réception (2) pour verrouiller et vider ladite cartouche de recharge (1) dans le logement de réception (2), dans chaque logement de réception (2), un mécanisme de verrouillage pour la cartouche de recharge (1), des moyens de décharge pour la cartouche de recharge (1) et des moyens de commande du système de verrouillage et de vidage, dans lesquels au voisinage de l'extrémité d'insertion de ladite cartouche de recharge (1) insérée dans le logement de réception (2), la face supérieure (4) de ladite cartouche de recharge (1) comprend une enfoncement de verrouillage (5), **caractérisé en ce que** ledit système comprend en outre en chaque logement de réception (2) pour chaque cartouche (1) un récipient de vidange (3) et dans lequel le mécanisme de verrouillage est situé à l'arrière du ledit logement de réception (2), comprenant un mécanisme à levier doté de trois leviers (7, 8, 9) reliés de manière rigide l'un à l'autre par leurs extrémités et formant généralement une unité en forme de T qui peut tourner autour de l'axe de rotation horizontale (10) du mécanisme à levier, ledit axe de rotation (10) étant transversal à la direction d'insertion de la cartouche de recharge (1);
tandis que le levier de verrouillage (7) comprend un crochet (11) pour l'engagement dans l'enfoncement de verrouillage (5) de la cartouche de recharge (1), l'extrémité du levier de commande (8) est reliée à un actionneur électromagnétique (19) dans le logement de réception (2) et le levier de poussée (9) est positionné entre le levier de verrouillage (7) et le levier de commande (8);
tandis que dans la position où ladite cartouche de recharge (1) est insérée dans le logement de réception (2), la face d'extrémité (13) de ladite cartouche de recharge (1) est pressée contre le levier de poussée (9) du mécanisme à levier, par conséquent ledit levier de poussée conjointement avec le levier de verrouillage (7) et le levier de commande (8) est mis en rotation autour de ledit axe de rotation (10); et
tandis que dans la position où ladite cartouche de recharge (1) est complètement insérée dans le logement de réception (2), ladite face d'extrémité (13) de la cartouche de recharge (1) est pressée contre ledit levier de poussée (9) et le crochet (11) à l'extrémité du levier de verrouillage (7) est entraîné en rotation autour de ledit axe de rotation (10) pour engagement avec l'enfoncement de verrouillage (5) de la cartouche de recharge (1);
le moyen de décharge de la cartouche de recharge (1) comprenant un moyen de perçage de l'ouverture de décharge (14) de la cartouche de recharge (1), ledit moyen de perçage comprenant une partie d'activation (16), une pointe de perçage (18) et entre eux un axe de rotation (17) du moyen de perçage est transversal par rapport au sens d'insertion de la cartouche de recharge (1) et dans la position où ladite cartouche de recharge (1) est complètement insérée dans le logement de réception (2), ladite face d'extrémité (13) de la cartouche de recharge (1) est pressée contre la partie d'activation (16) et ladite pointe de perçage (18) est entraîné en rotation autour du ledit axe de rotation (17) dans l'ouverture de décharge (14) de ladite cartouche de recharge (1).

2. Système selon la revendication 1, **caractérisé en ce que** pour libérer ladite cartouche de recharge (1) du logement de réception (2), l'actionneur électromagnétique (19) est activé par les moyens de commande du système de verrouillage et de vidage et en conséquence de l'activation de l'actionneur électromagnétique (19), le levier de commande (8) du mécanisme à levier ainsi que le levier de verrouillage (7) et le levier de poussée (9) sont entraînés en rotation autour de l'axe de rotation (10) du mécanisme à levier et le crochet (11) à l'extrémité du levier de verrouillage (7) est libéré de l'engagement avec l'enfoncement de verrouillage (5) de la cartouche de recharge (1) et le levier de poussée (9) est poussé contre la face d'extrémité (13) de la cartouche de recharge (1) et ladite cartouche de recharge (1) est déplacée dans la direction opposée à la direction d'insertion de ladite cartouche de recharge (1) dans le logement de réception (2).

3. Système selon la revendication 1, **caractérisé en ce que** pour libérer ladite cartouche de recharge (1) du logement de réception (2), l'actionneur électromagnétique (19) est activé par les moyens de commande du système de verrouillage et de vidage et en conséquence de l'activation de l'actionneur électromagnétique (19), le levier de commande (8) du mécanisme à levier ainsi que le levier de verrouillage (7) et le levier de poussée (9) sont entraînés en rotation autour de l'axe de rotation (10) du mécanisme à levier et le crochet (11) situé à l'extrémité du levier de verrouillage (7) est libéré de l'engagement avec l'enfoncement de verrouillage (5) de la cartouche de recharge (1) et le levier de poussée (9) est poussé contre la face d'extrémité (13) du cartouche de recharge (1) et ladite cartouche de recharge (1) est déplacée dans la direction opposée à la direction d'insertion de la cartouche de recharge (1) dans le logement de réception (2), et avec la saillie (12) au voisinage de l'extrémité du levier de poussée (9), ladite saillie (12) étant transversale à la rotation de ladite cartouche de recharge (1), la partie d'activation (16) du moyen de perçage de l'ouverture de décharge (14) de la cartouche de recharge (1) est entraînée en rotation autour de ledit axe de rotation (17) et la pointe de perçage (18) est tourné hors de ladite ouverture de décharge (14) de la cartouche de recharge (1).
